# FASCICULE DE BREVET EUROPEEN

(11) **EP 2 740 006 B1**
(45) Date de publication et mention de la délivrance du brevet: **07.10.2015**
(21) Numéro de dépôt: 12748749.4
(22) Date de dépôt: 02.08.2012
(51) Int. Cl.: G02F 1/01, G02F 1/35

(54) **PROCÉDÉ ET DISPOSITIF POUR LE CONTRÔLE D'UN PARAMÈTRE PHYSIQUE D'UN SIGNAL OPTIQUE.**
VERFAHREN UND VORRICHTUNG ZUR REGELUNG EINER PHYSIKALISCHEN PARAMETERS EINES OPTISCHEN SIGNALS
METHOD AND DEVICE FOR CONTROLLING A PHYSICAL PARAMETER OF AN OPTICAL SIGNAL

(30) Priorité: 05.08.2011 FR 1102472
(43) Date de publication de la demande: 11.06.2014
(73) Titulaire: Centre National de la Recherche Scientifique (CNRS), 75794 Paris Cedex 16 (FR); Université De Bourgogne, 21078 Dijon (FR)
(72) Inventeur: PITOIS, Stéphane, F-21910 Corcelles-les-Citeaux (FR); FATOME, Julien, F-21130 Auxonne (FR); MORIN, Philippe, F-21000 Dijon (FR); MILLOT, Guy, F-21220 Chevannes (FR)
(74) Mandataire: Gevers France
(86) Numéro de dépôt international: PCT/FR2012/051827
(87) Numéro de publication internationale: WO 2013/021122

(56) Documents cités:
- FR-A1- 2 950 164
- US-A1- 2007 103 684
- JULIEN FATOME ET AL: "Light-by-light polarization control for telecommunication applications", TRANSPARENT OPTICAL NETWORKS (ICTON), 2010 12TH INTERNATIONAL CONFERENCE ON, IEEE, PISCATAWAY, NJ, USA, 27 juin 2010 (2010-06-27), pages 1-4, XP031733284, ISBN: 978-1-4244-7799-9

## Description

La présente invention concerne un procédé et un dispositif pour le contrôle d'au moins un paramètre physique d'un signal optique.

Quoique non exclusivement, un tel procédé et un tel dispositif peuvent être utilisés pour stabiliser, ou à tout le moins contrôler, l'état de polarisation - ou tout autre paramètre physique tel qu'un mode spatial de propagation ou une longueur d'onde - d'un signal optique.

Plusieurs paramètres physiques fondamentaux d'un signal optique, tels que l'état de polarisation, les modes spatiaux et les longueurs d'ondes, sont susceptibles de varier au cours de la propagation de celui-ci. En effet, lorsque le signal optique se propage par exemple dans plusieurs kilomètres de fibre optique, la biréfringence - même légère - de cette dernière suffit à modifier de manière aléatoire l'état de polarisation dudit signal, ce qui engendre une incapacité à prévoir celui-ci.

Afin de stabiliser, ou à tout le moins de contrôler, l'état de polarisation d'un signal optique, il est déjà connu d'utiliser un système dissipatif, tel qu'un polariseur de Glan, permettant d'obtenir en sortie un signal optique à polarisation constante. Cette stabilisation se fait toutefois au détriment du niveau d'intensité dudit signal, dans la mesure où ledit niveau d'intensité dépend alors de l'état de polarisation et fluctue donc en même temps que fluctue la polarisation.

Par ailleurs, il est également connu d'utiliser un système électronique de rétrocontrôle, comprenant un premier élément de contrôle, optique, permettant de transformer n'importe quel état de polarisation en un autre état de polarisation, sans perte. Un deuxième élément, électronique, permet de mesurer et d'analyser l'état de polarisation résultant afin de transmettre ensuite au premier élément optique des instructions en vue de stabiliser l'état de polarisation final sur un état prédéterminé.

Toutefois, du fait du temps de réponse élevé du deuxième élément électronique, l'utilisation de ce type de système électronique de rétrocontrôle antérieur est limitée au contrôle de signaux optiques dont la polarisation varie à une vitesse faible.

Afin de stabiliser, sans perte aléatoire d'intensité lumineuse, un signal optique dont l'état de polarisation varie à une vitesse quelconque, il a été proposé dans le document de brevet FR 2 950 164 un système de contrôle tout-optique (donc sans électronique) de l'état de polarisation d'un signal optique. Dans ce document, le signal optique se propage dans un guide d'onde optique présentant une non-linéarité de type Kerr, ainsi qu'une faible dispersion des modes de polarisation. De plus, on envoie dans ce guide d'onde optique, d'une part, par son entrée, ledit signal optique initial, et, d'autre, par sa sortie, un signal optique de contrôle, contra-propageant par rapport au signal optique initial, dont l'état de polarisation est constant et dont le spectre est adapté pour minimiser la diffusion Brillouin dans ledit guide d'onde optique. De cette manière, l'interaction non-linéaire qui se produit dans le guide entre le signal optique initial et le signal optique contra- propageant, dont l'état de polarisation est constant, permet d'imposer audit signal optique initial l'état de polarisation constant du signal optique de sortie lorsque celui-ci sort dudit guide d'onde optique par sa sortie.

Toutefois, cette technique antérieure présente l'inconvénient de nécessiter une source apte à générer ledit signal optique contra- propageant, ce qui induit à la fois une conception complexe et un coût élevé. De surcroît, il a été constaté qu'avec cette technique antérieure à signal optique contra- propageant, le contrôle de l'état de polarisation du signal optique, après passage dans le guide d'onde optique, est sensible aux contraintes locales auxquelles ledit guide d'onde optique est soumis, ce qui perturbe la stabilisation dudit état de polarisation.

Par ailleurs, dans le document US 2007/103684 A1, est décrit un procédé tout-optique de contrôle d'un paramètre physique d'un signal optique initial, selon lequel on envoie dans un guide d'onde optique, par son entrée, le signal optique initial, et, par sa sortie, un signal optique de contrôle, contra-propageant par rapport audit signal optique initial, de manière à stabiliser, ou à tout le moins contrôler, le paramètre physique dudit signal optique initial lorsque celui-ci sort dudit guide d'onde optique par sa sortie, ce procédé étant remarquable en ce qu'on retourne au moins en partie, dans le guide d'onde optique, ledit signal optique initial ayant traversé ledit guide d'onde optique depuis son entrée jusqu'à sa sortie, pour former au moins en partie ledit signal optique de contrôle.

Ainsi, le signal optique contra-propageant est obtenu directement à partir du signal optique initial ayant traversé au moins une fois le guide d'onde optique, ce qui évite d'injecter un signal optique contra-propageant indépendant par l'intermédiaire d'une source spécifiquement prévue à cet effet. En effet, un simple élément optique de renvoi peut suffire pour prélever une partie du signal optique initial ayant traversé le guide d'onde optique et renvoyer celle-ci dans ledit guide, le reste dudit signal optique initial étant récupéré en sortie du dispositif de contrôle que forment ledit guide et l'élément optique de renvoi.

Il a été, en effet, constaté qu'en ce qui concerne l'état de polarisation d'un signal optique, le fait d'utiliser une partie du signal optique initial ayant traversé le guide d'onde optique, en tant que signal optique contra- propageant, produit un effet de stabilisation de l'état de polarisation similaire à celui produit par un signal contra-propageant à état de polarisation constant généré par une source lumineuse indépendante. Dès lors, en l'absence d'un état de polarisation constant à imposer au signal optique initial, ce dernier est stabilisé progressivement vers un état stable particulier, spécifique du guide d'onde optique et de l'état de polarisation initial dudit signal optique initial. Plus précisément, il a été constaté qu'au niveau de la sortie du guide d'onde optique (située en aval par rapport au sens de propagation du signal optique initial), le signal optique converge rapidement vers un état de polarisation parmi deux possibles. Dans une fibre optique isotrope, ces deux états correspondent aux polarisations circulaires gauche et droite, tandis que dans une fibre optique non-isotrope à faible biréfringence résiduelle, ceux-ci restent orthogonaux mais leurs valeurs précises dépendent de multiples paramètres de la fibre, notamment son enroulement, ses biréfringences linéaires et circulaires résiduelles, etc. Le signal optique converge vers celui des deux états de polarisation le plus proche de son état de polarisation initial.

Par ailleurs, la stabilisation du paramètre physique souhaité - par exemple l'état de polarisation - est peu sensible aux contraintes locales auxquelles est soumis le guide d'onde, ce qui permet une stabilisation d'autant plus fiable.

Selon le procédé du document US 2007/103684 A1, on retourne en partie, dans le guide d'onde optique, le signal optique initial ayant traversé le guide d'onde optique depuis son entrée jusqu'à sa sortie par l'intermédiaire d'un élément réfléchissant, qui peut être par exemple un miroir disposé en sortie du guide d'onde optique, ou bien encore un traitement réfléchissant appliqué sur la face de sortie dudit guide d'onde optique. Aussi, l'intensité lumineuse de la partie du signal retournée est inférieure à celle du signal optique initial, ce qui ne permet pas d'optimiser les interactions linéaires entre ces signaux. Par exemple , le coefficient de transmission du miroir est de l'ordre de 5%, ce qui permet de maintenir des intensités sensiblement égales (95%) entre les signaux contra-propageant dans le guide d'onde optique, au détriment de l'intensité lumineuse du signal optique stabilisé ayant traversé le miroir (5%).

La présente invention a pour objet de remédier a cet inconvénient.

A cette fin, selon l'invention, le procédé de contrôle d'un paramètre physique d'un signal optique initial, selon lequel on envoie dans un guide d'onde optique présentant un coefficient de non-linéarité de type Kerr non-nul :
- par son entrée, le signal optique initial, et
- par sa sortie, un signal optique de contrôle, contra-propageant par rapport audit signal optique initial et formé par une partie du signal optique initial ayant traversé le guide d'onde optique depuis son entrée jusqu'à sa sortie,
de manière à stabiliser, ou à tout le moins contrôler, le paramètre physique dudit signal optique initial lorsque celui-ci sort dudit guide d'onde optique par sa sortie, est remarquable en ce que :
- ladite partie du signal optique initial utilisée comme signal optique de contrôle est retournée dans le guide d'onde optique par l'intermédiaire 'un premier circulateur séquentiel à guide d'onde optique ; et
- on amplifie optiquement ladite partie de signal optique initial utilisé comme signal optique de contrôle, avant de la retourner dans ledit guide d'onde optique.

Ainsi, grâce à la présente invention, la partie du signal initial retournée peut être importante, ce qui permet d'optimiser les interactions entre les signaux contra propageants dans ledit guide d'onde optique, sans pour autant affaiblir le signal optique stabilisé de sortie.

On entend ici, par circulateur séquentiel à guide d'onde optique, un dispositif optique non-réciproque muni d'une pluralité de ports et apte à rediriger la lumière de port en port de manière séquentielle dans une unique direction. Un tel dispositif offre une bonne isolation optique , ainsi qu'une faible perte dépendant de l'état de polarisation du signal optique. De cette manière, le circulateur séquentiel rendant possible de réaliser une boucle entre deux ports, il est possible de modifier la partie du signal optique initial devant former le signal optique contra-propageant en lui faisant préalablement traverser différents éléments optiques adéquats.

Dès lors, avant que la partie du signal optique initial ayant traversé le guide d'onde optique, depuis son entrée jusqu'à sa sortie, soit retournée dans le guide d'onde optique, on peut :
- contrôler le paramètre de celle-ci, et/ou
- amplifier optiquement celle-ci.

Afin d'évacuer le signal optique contra-propageant résiduel une fois que celui-ci a interagi avec le signal optique initial, on peut disposer un circulateur séquentiel à guide d'onde optique par rapport au guide d'onde optique de manière, d'une part, que le signal optique initial soit envoyé vers l'entrée dudit guide d'onde optique par l'intermédiaire dudit circulateur séquentiel, et, d'autre part, que le signal optique de contrôle, après avoir traversé ledit guide d'onde optique depuis sa sortie jusqu'à son entrée, soit évacué.

Par ailleurs, la demanderesse a observé que, lorsque la quantité d'énergie retournée dans le guide d'onde, dans le sens contra-propageant, dépasse une valeur seuil (par exemple par l'intermédiaire d'un dispositif hautement réfléchissant ou d'un dispositif amplificateur), un seul des deux états de polarisation précédemment cités subsiste au détriment de l'autre et le signal converge donc vers un état unique. L'un ou l'autre de ces deux états propres peut ainsi être choisi comme unique point d'attraction. Aussi, avantageusement, la quantité d'énergie de la partie du signal optique initial ayant traversé le guide d'onde optique depuis son entrée jusqu'à sa sortie, et retournée dans ledit guide d'onde optique, peut être telle que le paramètre physique dudit signal optique initial converge, lorsque celui-ci sort dudit guide d'onde optique par sa sortie, vers une valeur propre prédéterminée. Il est ainsi possible de discriminer l'une ou l'autre des valeurs propres prédéterminées en transformant de façon linéaire le paramètre physique du signal de contrôle (par exemple au moyen d'un contrôleur de polarisation disposé dans la boucle du circulateur séquentiel mentionné précédemment).

Le paramètre à contrôler, conformément à la présente invention, peut être l'état de polarisation du signal optique initial.

Le paramètre à contrôler peut également être un mode spatial de propagation de ce signal. Dans ce cas, le guide d'onde optique est avantageusement multimodal, en ce sens qu'il accepte plusieurs modes spatiaux de propagation.

Le paramètre à contrôler peut encore être une longueur d'onde de ce signal.

Pour la mise en oeuvre du procédé conforme à la présente invention, on peut utiliser un dispositif de contrôle d'un paramètre physique d'un signal optique initial, ledit dispositif de contrôle comprenant, d'une part, un guide d'onde optique agencé pour recevoir, par son entrée, le signal optique initial, et, par sa sortie, un signal optique de contrôle, contra-propageant par rapport audit signal optique initial et, d'autre part, des moyens de retour, dans le guide d'onde optique, d'au moins une partie du signal optique initial ayant traversé ledit guide d'onde optique depuis son entrée jusqu'à sa sortie, pour former au moins en partie ledit signal optique de contrôle, de manière à stabiliser, ou à tout le moins contrôler, le paramètre physique dudit signal optique initial lorsque celui-ci sort dudit guide d'onde optique par sa sortie, ce dispositif étant remarquable en ce que lesdits moyens de retour comportent un circulateur séquentiel à guide d'onde optique et un amplificateur optique.

Le guide d'onde optique présente un coefficient de non-linéarité de type Kerr non-nul.

Les figures du dessin annexé feront bien comprendre comment l'invention peut être réalisée. Sur ces figures, des références identiques désignent des éléments techniques semblables.

La figure 1 est un schéma représentant le principe de fonctionnement d'un dispositif de contrôle connu.

La figure 2 est un schéma représentant un mode de réalisation du dispositif de contrôle connu de la figure 1.

La figure 3 est un schéma représentant le dispositif de contrôle conforme à la présente invention.

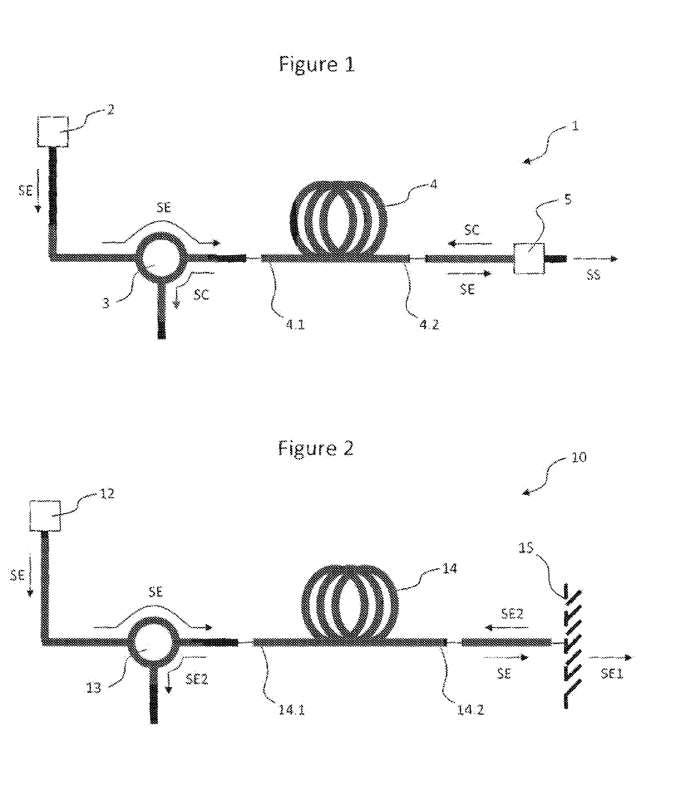

Le dispositif de contrôle 1, connu et représenté schématiquement sur la figure 1, est destiné à permettre de stabiliser, ou à tout le moins de contrôler, un paramètre physique caractérisant un signal optique initial SE, par exemple son état de polarisation, l'un de ses modes spatiaux de propagation ou l'une de ses longueurs d'onde. A cette fin, le dispositif de contrôle connu 1 comprend notamment un circulateur séquentiel à trois ports 3, un guide d'onde optique 4 et des moyens de retour de signaux optiques 5.

Le signal SE, qui peut être généré par exemple par une source lumineuse 2 et dont le paramètre physique à stabiliser fluctue au cours du temps, peut être par exemple un signal continu, éventuellement incohérent, ou bien un train d'impulsions. Afin d'éviter tout phénomène de rétrodiffusion Brillouin, le spectre de ce signal optique initial SE peut être préalablement élargi au moyen d'un modulateur de phase ou bien encore d'un compresseur d'impulsions.

Le guide d'onde optique 4 présente une non-linéarité de type Kerr, ainsi que préférentiellement une faible dispersion des modes de polarisation (bien que le dispositif de contrôle 1, du fait du retour d'une partie du signal optique initial pour former le signal optique de contrôle, soit moins sensible à la dispersion des modes de polarisation que le dispositif de contrôle décrit dans le document FR 2 950 164), afin que la condition d'accord de phase nécessaire à l'échange d'énergie entre les signaux soit réalisée localement, la stabilisation du paramètre physique du signal optique initial étant liée à un processus de mélange à quatre ondes.

Le signal optique initial SE est transmis au circulateur séquentiel 3, de manière que ledit signal SE rentre par un premier port et sorte par un deuxième port de ce circulateur. Le signal SE est ensuite envoyé dans le guide d'onde optique 4, par son entrée 4.1 (située en amont du dispositif 1 par rapport à la direction de propagation du signal SE), de sorte que ledit signal SE sorte dudit guide d'onde 4 par sa sortie 4.2 (située en aval du dispositif 1).

Simultanément, un signal optique de contrôle SC - ou signal de pompe - est envoyé dans le guide d'onde optique 4, par sa sortie 4.2, de manière que celui-ci soit contra-propageant par rapport au signal optique initiale SE. Ainsi, il se produit, à l'intérieur du guide d'onde optique 4, des interactions non-linéaires entre les deux signaux optiques SE et SC, si bien que le paramètre physique du signal optique de sortie SS, qui correspond au signal optique initial SE ayant traversé ledit guide d'onde optique 4 de son entrée 4.1 à sa sortie 4.2 et étant sorti de celui-ci par sa sortie 4.2 (et ayant également traversé les moyens de retour 5), est stabilisé dans un état particulier.

Le signal optique de contrôle SC, après être ressorti du guide d'onde optique 4 par son entrée 4.1 et ayant donc déjà interagi avec le signal optique initial SE de manière à stabiliser le paramètre physique de ce dernier, atteint alors le deuxième port du circulateur 3, pour être ensuite dirigé vers le troisième port de ce dernier, d'où il peut être ainsi évacué du dispositif de contrôle 1.

Dans le cas où le paramètre physique à stabiliser est l'état de polarisation du signal optique initial SE et comme cela est expliqué dans le document FR 2 950 164, il a été constaté que, lorsque l'état de polarisation du signal optique de contrôle SC est fixe dans le temps, l'état du signal optique initial SE converge vers cet état fixe. Toutefois, le recours à un signal optique de contrôle SC de polarisation fixe, vis-à-vis du signal optique initial SE à polarisation fluctuante, nécessite une source lumineuse indépendante apte à générer ce signal optique SC.

Afin de s'affranchir de l'utilisation d'une telle source, des moyens de retour 5 sont prévus en aval (par rapport à la direction de propagation du signal optique initial SE) de la sortie 4.2 du guide d'onde optique 4. Ces moyens de retour 5 sont plus précisément disposés de sorte que le signal optique initial SE, après être sorti du guide d'onde optique 4 par sa sortie 4.2, atteigne ceux-ci, pour y être séparé en deux parties distinctes : une première partie, formant le signal de sortie stabilisé, et une deuxième partie destinée à être retournée dans le guide d'onde optique 4 afin de se propager dans ce dernier dans la direction opposée à la direction de propagation du signal SE, et ainsi à former au moins une partie (préférentiellement l'intégralité) du signal optique de contrôle SC.

Ainsi, lorsque le signal optique initial SE sort du guide d'onde 4 par sa sortie 4.2, son état de polarisation converge rapidement vers un état de polarisation parmi deux possibles. Dans une fibre optique isotrope, ces deux états correspondent aux polarisations circulaires gauche et droite. Dans une fibre optique non-isotrope à faible biréfringence résiduelle, ceux-ci restent orthogonaux, mais leurs valeurs précises dépendent de multiples paramètres de la fibre optique, notamment son enroulement, ses biréfringences linéaires et circulaires résiduelles, etc. Le signal optique converge vers celui des deux états de polarisation le plus proche de son état de polarisation initial.

Plus précisément, pour une fibre optique isotrope, tous les états de polarisation initiaux situés dans l'hémisphère supérieur de la sphère de Poincaré convergent vers l'état propre de polarisation situé au pôle supérieur de la sphère, tandis que tous les états de polarisation situés dans l'hémisphère inférieur convergent vers le pôle inférieur de ladite sphère. Ainsi, toutes les variations de polarisation du signal optique initial, dans un même hémisphère de la sphère de Poincaré, sont absorbées et un état de polarisation unique est obtenu en sortie du dispositif de contrôle 1. On notera alors que, lorsque les fluctuations de polarisation couvrent plus d'un hémisphère, deux états de polarisation sont obtenus en sortie.

De plus, il a été observé que, lorsque la quantité d'énergie réinjectée dans le guide d'onde optique dans le sens contra-propageant dépasse une valeur seuil, l'un des deux états propres au guide d'onde optique est privilégié et l'état de polarisation du signal de sortie converge alors vers cet unique état propre.

La figure 2 représente schématiquement un mode de réalisation connu 10 appliquant le principe de fonctionnement illustré par la figure 1. Dans ce mode de réalisation connu, la source 12, le circulateur séquentiel 13 et le guide d'onde optique 14, ainsi que son entrée 14.1 et sa sortie 14.2, sont semblables respectivement aux éléments référencés 2, 3, 4, 4.1 et 4.2 sur la figure 1. Les moyens de retour 5 sont formés d'un miroir 15, dont le coefficient de transmission est par exemple de 5%. A cette fin, le miroir 15 peut être un réseau de Bragg ou de Faraday, centré sur la longueur d'onde du signal SE. Ce miroir 15 est disposé de manière, d'une part, à laisser passer une première partie SE1 du signal optique initial SE (par exemple 5% de celui-ci), une fois que celui-ci a traversé le guide d'onde optique 14 depuis son entrée 14.1 jusqu'à sa sortie 14.2, et, d'autre part, à retourner une deuxième partie SE2 dudit signal optique initial SE (par exemple 95% de celui-ci) dans le guide d'onde optique 14, afin que cette deuxième partie SE2 forme le signal optique de contrôle apte à interagir de façon non-linéaire avec le signal SE dans le guide 14.

On notera toutefois que, dans ce mode de réalisation connu, du fait qu'il importe que les intensités lumineuses du signal optique initial SE et du signal optique de contrôle SE2 soient proches l'une de l'autre, il est nécessaire que la majeure partie dudit signal SE soit renvoyée par le miroir 15, ce qui engendre de fait une faible récupération de signal optique stabilisé (seulement 5% dans l'exemple ci-dessus).

On notera que, en vue de remplir cette fonction de retour du signal optique initial, les moyens de retour mentionnés ci-dessus peuvent être formés par tout élément réfléchissant autre que le miroir 15. Ces moyens de retour peuvent ainsi être, à titre d'exemple, un traitement réfléchissant appliqué sur la face de sortie du guide d'onde optique.

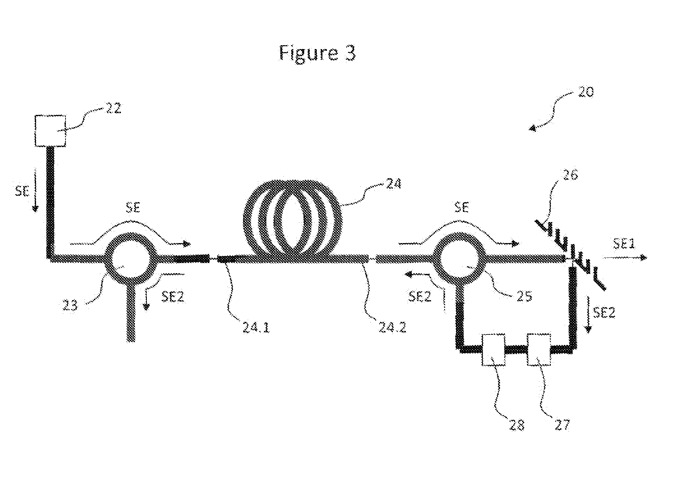

La figure 3 représente schématiquement un mode de réalisation du dispositif de contrôle 20 conformément à la présente invention. Dans ce mode de réalisation, la source lumineuse 22, le circulateur séquentiel 23 et le guide d'onde optique 24, ainsi que son entrée 24.1 et sa sortie 24.2, sont semblables respectivement aux éléments référencés 2, 3, 4, 4.1 et 4.2 sur la figure 1. Les moyens de renvoi 25 à 28 comprennent cette fois un circulateur séquentiel à trois ports 25, un miroir 26, ainsi qu'un contrôleur optique de polarisation 27 et un amplificateur optique 28.

Ces éléments 25 à 28 sont disposés en aval du guide d'onde optique 24 (par rapport à la direction de propagation du signal optique initial SE), de manière que le signal optique initial SE, après avoir traversé ledit guide 24, entre dans le circulateur séquentiel 25 par un premier port et sorte de celui-ci par un deuxième port, pour être ensuite dirigé vers le miroir 26.

Le miroir 26, au contraire du miroir 15 du dispositif de contrôle 10 décrit ci-dessus en référence à la figure 2, peut présenter un coefficient de transmission élevé (par exemple 95%). Ce miroir 26 est disposé de manière, d'une part, à laisser passer une première partie SE1 du signal optique initial SE (par exemple 95% de celui-ci) une fois que celui-ci a traversé le guide d'onde optique 24 depuis son entrée 24.1 jusqu'à sa sortie 24.2, et, d'autre part, à retourner une deuxième partie SE2 dudit signal optique initial SE (par exemple 5% de celui-ci) vers le contrôleur de polarisation 27 et l'amplificateur optique 28, puis vers le troisième port du circulateur 25.

Le contrôleur de polarisation 27, par exemple un dispositif de boucles de Lefebvre, permet de modifier la polarisation de la partie de signal SE2 qui servira de signal de contrôle contra-propageant et ainsi de choisir au final l'état de polarisation de sortie fixe souhaité. L'amplificateur optique 28 permet ensuite d'amplifier la partie de signal SE2 ainsi polarisée, de manière que son intensité lumineuse soit proche de celle du signal optique initial SE. Une fois atteint le troisième port du circulateur 25, la partie de signal SE2 ainsi amplifiée ressort par le premier port de celui-ci pour être dirigée jusque dans le guide d'onde optique 24, afin que cette deuxième partie SE2 forme le signal optique de contrôle apte à interagir de façon non-linéaire avec le signal optique initial SE dans ledit guide 24. Dès lors, deux modes de fonctionnement sont envisageables. Plus précisément, lorsque la puissance retournée dans le guide d'onde optique n'est pas suffisante (inférieure à une valeur seuil prédéterminée), l'état de polarisation du signal optique initial converge vers deux points d'attraction (ou états de polarisation propres), le point d'attraction vers lequel celui-ci converge effectivement étant déterminé par l'état de polarisation initial dudit signal optique initial (i.e. suivant son hémisphère initial). A l'inverse, lorsque la puissance retournée dans le guide d'onde optique est suffisante (supérieure à une valeur seuil prédéterminée), l'état de polarisation du signal optique initial converge vers un seul point d'attraction (ou état de polarisation propre).

On remarquera que, dans le mode de réalisation de l'invention avec circulateur, du fait de l'utilisation d'un circulateur séquentiel 25, la partie de signal SE2 effectue une boucle (miroir 26, contrôleur 27, amplificateur 28) entre deux passages dans ledit circulateur 25, ce qui permet d'amplifier cette partie SE2 avant son retour dans le guide 24 sans dégrader pour autant la qualité du signal stabilisé de sortie SE1. Ainsi, il peut être fourni, en sortie du dispositif de contrôle 20 selon l'invention, un signal de sortie SE1 d'intensité lumineuse satisfaisante, tandis que la partie SE2, destinée à former le signal de contrôle et à être amplifiée par l'amplificateur 28, peut être d'intensité moindre, étant considéré que la qualité intrinsèque du signal optique de contrôle est moins déterminante pour la stabilisation du signal optique initial SE que le rapport des intensités lumineuses entre ces deux signaux.

Le choix du paramètre physique à stabiliser, parmi notamment l'état de polarisation, un mode spatial de propagation et une longueur d'onde, dépend également de l'application envisagée. A cette fin, les exemples décrits ci-dessus, pour le contrôle de l'état de polarisation d'un signal optique, pourront être adaptés pour le contrôle d'autres paramètres physiques caractérisant celui-ci.

Ainsi, la présente invention peut être notamment appliquée à la stabilisation de l'état de polarisation d'un signal dans un système à base de fibres optiques (systèmes de télécommunications par fibres optiques, lasers à fibres optiques, capteurs à fibres optiques, métrologie, régénérateurs tout-optiques, etc.). Dans ce cas, l'invention permet d'envisager d'augmenter les performances de tels systèmes par fibres optiques en relâchant les contraintes vis-à-vis de la polarisation.

L'invention permet également d'envisager de compenser la dispersion des modes de polarisation induite par la biréfringence résiduelle des fibres optiques, ce qui peut constituer un effet limitatif pour les transmissions à haut-débit, ou encore d'améliorer les systèmes basés sur une détection cohérente.

De plus, pour une application par exemple de multiplexage en longueur d'onde, il peut être recouru au contrôle, conformément à la présente invention, de l'état de polarisation d'un signal présentant plusieurs longueurs d'onde qui polarisent respectivement des états de polarisation différents.

Par ailleurs, dans la mesure où la présente invention permet de faire converger toutes les valeurs d'un paramètre physique caractérisant un signal optique vers une unique valeur stable, celle-ci permet de sélectionner cette unique valeur sans filtrer les autres, mais en amenant ces dernières jusqu'à ladite valeur stable. Ainsi, pour le contrôle d'une longueur d'onde du signal, il est possible d'envisager une application de la présente invention consistant à filtrer une longueur d'onde, non pas en éliminant les longueurs d'onde non souhaitées, mais en ramenant ces longueurs d'onde non souhaitées vers la longueur d'onde à filtrer.

Une autre application envisageable peut consister en l'utilisation du fait que la valeur du paramètre physique (par exemple l'état de polarisation) est attirée vers l'une parmi deux valeurs, propres au guide d'onde optique, pour réaliser un dispositif de discrimination de polarisation, par exemple pour des applications de triage de polarisation dans des signaux de télécommunications multiplexés en polarisation.

On notera que tous les éléments du dispositif de contrôle selon l'invention, à travers lesquels les signaux optiques sont destinés à se propager, peuvent être fibrés. Ainsi, le dispositif de contrôle est entièrement fibré, ce qui assure, d'une part, un guidage lumineux satisfaisant, et, d'autre part, une minimisation des pertes en intensité lumineuse des signaux optiques.

En ce qui concerne plus particulièrement le contrôle des modes spatiaux de propagation, on notera que plusieurs d'entre eux sont susceptibles de coexister dans une fibre optique. Le nombre de modes spatiaux dépend des paramètres de la fibre (profil d'indice, diamètre du coeur) et de la longueur d'onde de la lumière injectée. Chaque mode de propagation est caractérisé par sa constante de propagation, sa répartition spatiale d'énergie et ses propriétés de polarisation. Ainsi, dans le cas d'une fibre optique dans laquelle deux modes spatiaux de propagation peuvent se propager simultanément, ces deux modes spatiaux ayant la même longueur d'onde et le même état de polarisation, mais présentant toutefois des valeurs de constantes de propagation différentes, la présente invention permet de stabiliser la répartition d'énergie entre ces deux modes spatiaux.

## Revendications

1. Procédé de contrôle d'un paramètre physique d'un signal optique initial (SE), selon lequel on envoie dans un guide d'onde optique (24) présentant un coefficient de non-linéarité de type Kerr non-nul :
- par son entrée (24.1), le signal optique initial (SE), et
- par sa sortie (24.2), un signal optique de contrôle (SE2), contra-propageant par rapport audit signal optique initial (SE) et formé par une partie (SE2) du signal optique initial (SE) ayant traversé le guide d'onde optique (24) depuis son entrée (24.1) jusqu'à sa sortie (24.2),
de manière à stabiliser, ou à tout le moins contrôler, le paramètre physique dudit signal optique initial (SE) lorsque celui-ci sort dudit guide d'onde optique (24) par sa sortie (24.2),
**caractérisé en ce que** :
• ladite partie (SE2) du signal optique initial (SE) utilisée comme signal optique de contrôle est retournée dans le guide d'onde optique (24) par l'intermédiaire d'un premier circulateur séquentiel à guide d'onde optique (25) ; et
• on amplifie optiquement ladite partie (SE2) de signal optique initial (SE) utilisé comme signal optique de contrôle, avant de la retourner dans ledit guide d'onde optique (24).

2. Procédé de contrôle selon la revendication 1,
**caractérisé en ce qu'**on utilise un élément partiellement réfléchissant (26) pour retourner, dans ledit guide d'onde optique (24), ladite partie (SE2) du signal optique initial (SE) utilisée comme signal optique de contrôle.

3. Procédé de contrôle selon l'une des revendications 1 ou 2,
**caractérisé en ce que** l'on contrôle le paramètre physique de ladite partie (SE2) du signal optique initial (SE) utilisée comme signal optique de contrôle, avant de la retourner dans ledit guide d'onde optique (24).

4. Procédé de contrôle selon l'une des revendications précédentes,
**caractérisé en ce qu'**on dispose un second circulateur séquentiel à guide d'onde optique (23) en amont du guide d'onde optique (24) de manière, d'une part, que le signal optique initial (SE) soit envoyé vers l'entrée (24.1) dudit guide d'onde optique (24) par l'intermédiaire dudit second circulateur séquentiel (23), et, d'autre part, que la partie (SE2) du signal optique initial (SE), utilisée comme signal optique de contrôle, soit évacuée.

5. Procédé de contrôle selon lune des revendications précédentes,
**caractérisé en ce que** la quantité d'énergie de la partie (SE2) du signal optique initial (SE), utilisée comme signal optique de contrôle et retournée dans ledit guide d'onde optique (24), est telle que le paramètre physique dudit signal optique initial (SE) converge, lorsque celui-ci sort dudit guide d'onde optique (24) par sa sortie (24.2), vers une valeur propre déterminée.

6. Procédé de contrôle selon l'une des revendications 1 à 5,
**caractérisé en ce que** ledit paramètre physique est l'état de polarisation.

7. Procédé de contrôle selon l'une des revendications 1 à 5,
**caractérisé en ce que** ledit paramètre physique est un mode spatial de propagation.

8. Procédé de contrôle selon la revendication 7,
**caractérisé en ce que** le guide d'onde optique (24) est multimodal.

9. Procédé de contrôle selon l'une des revendications 1 à 5,
**caractérisé en ce que** ledit paramètre physique est une longueur d'onde.

10. Dispositif de contrôle (20) d'un paramètre physique d'un signal optique initial (SE), ledit dispositif de contrôle (20) comprenant :
• un guide d'onde optique (24) présentant un coefficient de non-linéarité de type Kerr non-nul, agencé pour recevoir par son entrée (24.1) ledit signal optique initial (SE) et par sar sortie (24.2) un signal optique de contrôle (SE2), contra-propageant par rapport audit signal optique initial (SE), et
• des moyens de retour (25-28), dans le guide d'onde optique (24), d'une partie (SE2) du signal optique initial (SE) ayant traversé ledit guide d'onde optique (24) depuis son entrée (24.1) jusqu'à sa sortie (24.2), pour former ledit signal optique de contrôle (SE2)
de manière à stabiliser, ou à tout le moins contrôler, le paramètre physique dudit signal optique initial (SE) lorsque celui-ci sort dudit guide d'onde optique (24) par sa sortie (24.2),
**caractérisé en ce que** lesdits moyens de retour (25-28) comportent un circulateur séquentiel à guide d'onde optique (25) et un amplificateur optique (28).

11. Dispositif de contrôle selon la revendication 10,
**caractérisé en ce que** lesdits moyens de retour (25-28) comportent un élément partiellement réfléchissant (26).

## Patentansprüche

1. Verfahren zur Kontrolle eines physikalischen Parameters eines optischen Ausgangssignals (SE), nach dem in einen optischen Wellenleiter (24), der einen Nichtlinearitätskoeffizienten des Typs Kerr ungleich Null aufweist, gesendet wird:
- durch seinen Eingang (24.1) das optische Ausgangssignal (SE), und
- durch seinen Ausgang (24.2) ein optisches Kontrollsignal (SE2), das sich in Bezug zum optischen Ausgangssignal (SE) entgegengesetzt ausbreitet und von einem Teil (SE2) des optischen Ausgangssignals (SE), das den optischen Wellenleiter (24) von seinem Eingang (24.1) bis zu seinem Ausgang (24.2) durchquert hat, gebildet ist,
um den physikalischen Parameter des optischen Ausgangssignals (SE) zu stabilisieren oder zumindest zu kontrollieren, wenn dieses aus dem optischen Wellenleiter (24) durch seinen Ausgang (24.2) austritt,
**dadurch gekennzeichnet, dass**
• der Teil (SE2) des optischen Ausgangssignals (SE), der als optischen Kontrollsignal verwendet wird, in den optischen Wellenleiter (24) mit Hilfe eines ersten sequentiellen Zirkulators mit optischem Wellenleiter (25) zurückgeschickt wird; und
• der Teil (SE2) des optischen Ausgangssignals (SE), der als optisches Kontrollsignal verwendet wird, optisch verstärkt wird, bevor er in den optischen Wellenleiter (24) zurückgeschickt wird.

2. Kontrollverfahren nach Anspruch 1,
**dadurch gekennzeichnet, dass** ein teilweise reflektierendes Element (26) verwendet wird, um den Teil (SE2) des optischen Ausgangssignals (SE), der als optisches Kontrollsignal verwendet wird, in den optischen Wellenleiter (24) zurückzuschicken.

3. Kontrollverfahren nach einem der Ansprüche 1 oder 2,
**dadurch gekennzeichnet, dass** der physikalische Parameter des Teils (SE2) des optischen Ausgangssignals (SE), der als optisches Kontrollsignal verwendet wird, kontrolliert wird, bevor er in den optischen Wellenleiter (24) zurückgeschickt wird.

4. Kontrollverfahren nach einem der vorhergehenden Ansprüche,
**dadurch gekennzeichnet, dass** ein zweiter sequentieller Zirkulator mit optischem Wellenleiter (23) stromaufwärts zu dem optischen Wellenleiter (24) angeordnet wird, damit einerseits das optische Ausgangssignal (SE) zum Eingang (24.1) des optischen Wellenleiters (24) mit Hilfe des zweiten sequentiellen Zirkulators (23) zurückgeschickt wird, und andererseits der Teil (SE2) des optischen Ausgangssignals (SE), der als optisches Kontrollsignal verwendet wird, entfernt wird.

5. Kontrollverfahren nach einem der vorhergehenden Ansprüche,
**dadurch gekennzeichnet, dass** die Energiemenge des Teils (SE2) des optischen Ausgangssignals (SE), der als optisches Kontrollsignal verwendet und in den optischen Wellenleiter (24) zurückgeschickt wird, derart ist, dass der physikalische Parameter des optischen Ausgangssignals (SE), wenn dieses aus dem optischen Wellenleiter (24) durch seinen Ausgang (24.2) austritt, zu einem bestimmten Eigenwert konvergiert.

6. Kontrollverfahren nach einem der Ansprüche 1 bis 5,
**dadurch gekennzeichnet, dass** der physikalische Parameter der Polarisationszustand ist.

7. Kontrollverfahren nach einem der Ansprüche 1 bis 5,
**dadurch gekennzeichnet, dass** der physikalische Parameter ein Raumausbreitungsmodus ist.

8. Kontrollverfahren nach Anspruch 7,
**dadurch gekennzeichnet, dass** der optische Wellenleiter (24) multimodal ist.

9. Kontrollverfahren nach einem der Ansprüche 1 bis 5,
**dadurch gekennzeichnet, dass** der physikalische Parameter eine Wellenlänge ist.

10. Vorrichtung (20) zur Kontrolle eines physikalischen Parameters eines optischen Ausgangssignals (SE), wobei die Kontrollvorrichtung (20) umfasst:
• einen optischen Wellenleiter (24), der einen Nichtlinearitätskoeffizienten des Typs Kerr ungleich Null aufweist, der derart vorgesehen ist, dass er durch seinen Eingang (24.1) das optische Ausgangssignal (SE) und durch seinen Ausgang (24.2) ein optisches Kontrollsignal (SE2), das sich in Bezug zum optischen Ausgangssignal (SE) entgegengesetzt ausbreitet, empfängt, und
• Mittel (25 - 28) zum Zurückschicken eines Teils (SE2) des optischen Ausgangssignals (SE), das den optischen Wellenleiter (24) von seinem Eingang (24.1) bis zu seinem Ausgang (24.2) durchquert hat, in den optischen Wellenleiter (24), um das optische Kontrollsignal (SE2) zu bilden,
um den physikalischen Parameter des optischen Ausgangssignals (SE), wenn dieses aus dem optischen Wellenleiter (24) durch seinen Ausgang (24.2) austritt, zu stabilisieren oder zumindest zu kontrollieren,
**dadurch gekennzeichnet, dass** die Mittel (25 - 28) zum Zurückschicken einen sequentiellen Zirkulator mit optischem Wellenleiter (25) und einen optischen Verstärker (28) umfassen.

11. Kontrollvorrichtung nach Anspruch 10,
**dadurch gekennzeichnet, dass** die Mittel (25 - 28) zum Zurückschicken ein teilweise reflektierendes Element (26) umfassen.

## Claims

1. Control method for a physical parameter of an initial optical signal (SE), according to which there is transmitted into an optical waveguide (24) having a non-zero kerr type non-linearity coefficient:
- via its input (24.1), the initial optical signal (SE), and,
- via its output (24.2) an optical control signal (SE2) which is counter-propagated relative to the initial optical signal (SE) and which is formed by a portion (SE2) of the initial optical signal (SE) which has passed through the optical waveguide (24) from the input (24.1) as far as the output (24.2) thereof,
in order to stabilise or at least to control the physical parameter of the initial optical signal (SE) when the signal is discharged from the optical waveguide (24) via its output (24.2),
**characterised in that**:
• the portion (SE2) of the initial optical signal (SE) used as the optical control signal is returned into the optical waveguide (24) by means of a first sequential circulator having an optical waveguide (25); and
• the portion (SE2) of initial optical signal (SE) used as an optical control signal is optically amplified before it is returned into the optical waveguide (24).

2. Control method according to claim 1,
**characterised in that** a partially reflective element (26) is used in order to return into the optical waveguide (24) the portion (SE2) of the initial optical signal (SE) used as the optical control signal.

3. Control method according to either claim 1 or claim 2,
**characterised in that** the physical parameter of the portion (SE2) of the initial optical signal (SE) used as the optical control signal is controlled before it is returned into the optical waveguide (24).

4. Control method according to any of the preceding claims,
**characterised in that** there is provided a second sequential circulator having an optical waveguide (23) upstream of the optical waveguide (24) so that, on the one hand, the initial optical signal (SE) is transmitted towards the input (24.1) of the optical waveguide (24) by means of the second sequential circulator (23) and, on the other hand, the portion (SE2) of the initial optical signal (SE), which portion is used as the optical control signal, is discharged.

5. Control method according to any of the preceding claims,
**characterised in that** the quantity of energy of the portion (SE2) of the initial optical signal (SE), which portion is used as the optical control signal and is returned into the optical waveguide (24), is such that the physical parameter of the initial optical signal (SE) converges when it is output from the optical waveguide (24) via the output (24.2) thereof towards a predetermined individual value.

6. Control method according to any of claims 1 to 5,
**characterised in that** the physical parameter is the polarisation state.

7. Control method according to any of claims 1 to 5,
**characterised in that** the physical parameter is a spatial propagation mode.

8. Control method according to claim 7,
**characterised in that** the optical waveguide (24) is multimodal.

9. Control method according to any of claims 1 to 5,
**characterised in that** the physical parameter is a wavelength.

10. Control device (20) for a physical parameter of an initial optical signal (SE), the control device (20) comprising:
• an optical waveguide (24) having a non-zero kerr type non-linearity coefficient, which is provided to receive, via its input (24.1), the initial optical signal (SE) and, via its output (24.2), an optical control signal (SE2) which is counter-propagated relative to the initial optical signal (SE) and
• means for returning (25-28) into the optical waveguide (24) a portion (SE2) of the initial optical signal (SE) which has passed through the optical waveguide (24) from the input (24.1) as far as the output (24.2) thereof in order to form the optical control signal (SE2)
so as to stabilise or at least to control the physical parameter of the initial optical signal (SE) when it is discharged from the optical waveguide (24) via its output (24.2),
**characterised in that** the return means (25-28) comprise a sequential circulator having an optical waveguide (25) and an optical amplifier (28).

11. Control device according to claim 10,
**characterised in that** the return means (25-28) comprise a partially reflective element (26).
